# EUROPEAN PATENT APPLICATION

(11) **EP 4 550 245 A1**
(43) Date of publication of application: **07.05.2025**
(21) Application number: 24210270.5
(22) Date of filing: 31.10.2024
(51) Int. Cl.: G06Q 30/0282

(54) **TOKEN BASED APPROACH FOR PROVIDING CERTIFIED REVIEWS ON THIRD-PARTY REVIEW SERVICES**

(30) Priority: 31.10.2023 US 202318498398
(71) Applicant: Intuit Inc., Mountain View, CA 94043 (US)
(72) Inventor: SCOTT, Glenn C., Mountain View, 94043 (US); MEIKE, Roger C., Mountain View, 94043 (US); MARTIROSYAN, Aram, Mountain View, 94043 (US)
(74) Representative: D Young & Co LLP

(57) **Abstract**

A method for providing certified reviews on a third-party review service includes obtaining one or more tokens associated with a transaction between a buyer and a seller to purchase an item from the seller. The method includes authenticating the buyer to provide a review of at least one of the seller or the item based on the one or more tokens. The method includes receiving a review generated by the buyer and, based on the authenticating, publishing the review so that the review is publicly accessible via the third-party-review service. The method includes providing a public indication that the published review is certified.

## Description

### INTRODUCTION

Aspects of the present disclosure are directed to token-based techniques for providing certified reviews on third-party review services. More particularly, the present disclosure is directed to generating right to review tokens that can be used to authenticate buyers submitting reviews of sellers and/or items (e.g., product or service) sold to third-party review services.

### BACKGROUND

Third-party review services that publish reviews for all types of sellers have become popular in recent years. However, in addition to publishing valid reviews submitted by buyers that purchased a product or service from a given seller, these third-party review services may also be used to publish fraudulent reviews. For instance, an individual that has not purchased a product or service offered by a seller may nonetheless submit a fake review for the seller. Generative artificial intelligence chatbots may also be used to automatically generate fake reviews for a seller that, in some instances, are indistinguishable from valid reviews for the seller. These fake reviews make it difficult for potential buyers to ascertain a true reputation of a seller. As a result, buyers may consider reviews published on such third-party review services to be unreliable, which can be especially harmful to some sellers (e.g., small businesses) that rely on published reviews on these third-party review services to grow their client base. Existing third-party review services are generally unable to automatically detect fraudulent reviews, as these services are typically managed by third-parties (e.g., parties other than the buyers and sellers), and thus do not have access to electronic records that could otherwise be used to authenticate reviews.

Accordingly, there is a need for techniques for certifying reviews submitted to third-party review services.

### BRIEF SUMMARY

In one aspect, a method is provided. The method includes: obtaining, via one or more processors, one or more tokens associated with a transaction between a buyer and a seller to purchase an item from the seller; authenticating, by the one or more processors, the buyer to provide a review of at least one of the seller or the item based on the one or more tokens; receiving, by the one or more processors, a review generated by the buyer; based on the authenticating, publishing, by the one or more processors, the review so that the review is publicly accessible via the third-party review service; and providing, by the one or more processors, a public indication that the published review is certified.

In another aspect, a computer-readable medium is provided that encodes instructions that, when executed by a computer system, cause the computer system to perform the method set forth above. In yet another aspect, a system is provided that includes at least one memory and at least one processor configured to perform the method set forth above.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts a computing environment for generating certified reviews for third-party review services according to some embodiments of the present disclosure.
**FIG. 2** depicts a sequence diagram of a process for generating certified reviews for third-party review services according to some embodiments of the present disclosure.
**FIG. 3** depicts a flow diagram of a method for generating certified reviews for third-party review services according to some embodiments of the present disclosure.
**FIG. 4** depicts a certified review published by a third-party review service according to some embodiments of the present disclosure.
**FIGs. 5A** and 5**B** depict example computing systems according to some embodiments of the present disclosure.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Example aspects of the present disclosure are directed to token based techniques for providing certified reviews on third-party review services. For example, a right to review token may be generated when a buyer initiates a transaction with a seller to purchase a product or service offered by the seller. The right to review token may be a digital token that includes a signature (e.g., signed by a private key) that is unique to the seller. In this manner, the right to review token may be used to authenticate the buyer to the third-party review service. For instance, in some embodiments, the third-party review service may determine the buyer has the right to submit a review of the seller by verifying that the signature (e.g., signed by a private key) included in the right to review token belongs to the seller.

In some embodiments, the right to review token may be generated by the seller and provided directly to the buyer. In alternative embodiments, the seller may, in response to the buyer initiating the transaction with the seller, send a request to the third-party review service to generate the right to review token. In such embodiments, the seller may send the buyer a unique uniform resource location (URL) address that points to the right to review token generated by the third-party review service. In this manner, the buyer may access the right to review token via the unique URL address.

In some embodiments, the right to review token may, in addition to the signature (e.g., signed by a private key) that is unique to the seller and is used to authenticate the buyer to the third-party review service, include additional information. For example, the right to review token may include a timestamp indicating a time of creation for the right to review token. Alternatively, or additionally, the right to review token may include details of the transaction initiated by the buyer. For example, such details may include an itemized list of products and/or services the buyer purchased from the seller. Alternatively, or additionally, the right to review token may include comments provided by the seller on the transaction.

It should be appreciated that the additional information may be included in plaintext or, alternatively, may be encrypted. Furthermore, in some embodiments, a portion of the additional information may be in plaintext and another portion of the additional information may be encrypted.

After the buyer is authenticated, a review of the seller that is generated by the buyer may be published so that the review is publicly available via the third-party review service. It should be appreciated that the published review is certified as a result of the corresponding right to review token authenticating its origin (that is, the seller).

The third-party review service may provide a public indication that the published review is certified (that is, not fraudulent). For example, the public indication may include denoting the published review with an indicator (e.g., text and/or graphical image) that the published review is certified without making the right to review token publicly available. Alternatively, or additionally, the third-party review service may provide the public indication that the published review is certified by making the right to review token publicly available. For example, the third-party review service may store the right to review token on a blockchain. In this manner, the right to review token may be inspected by other individuals using the third-party review service to verify for themselves that the review is certified. It should be appreciated, however, that the scope of the present disclosure is intended to cover any suitable manner of making the right to review token publicly available.

In some embodiments, the third-party review service may require the seller to provide a unique right to review token to every buyer that initiates a transaction with the seller. In this manner, the seller may be prevented from providing right to review tokens only to those buyers that the seller knows will provide a positive review of the seller and thereby inflate the seller's reputation on the third-party review service. For example, the third-party review service may only allow reviews to be published for sellers that certify that they provide right to review tokens to all buyers, and may disallow reviews of sellers that do not provide such a certification.

In some embodiments, another token besides the right to review token may be required in order to authenticate the buyer to the third-party review service. For instance, a payment token may be required that provides proof of the transaction, such as financial information indicating that the buyer paid the seller a sum of money for the item (e.g., product or service). In such embodiments, the payment token and the right to review token may both be provided to the third-party review service for purposes of authenticating the buyer so that a review of the seller generated by the buyer may be published on the third-party review service so that the review is publicly available.

In some embodiments, a right to review token may be provided for the item (e.g., product or service) that the buyer purchased from the seller. In this manner, the buyer may be allowed to submit a review of the item itself. In such embodiments, the right to review token for the item may include a signature (e.g., signed by a private key) that is unique to the item. In this manner, the third-party review service may determine the buyer has the right to submit a review of the item by verifying the signature included in the separate right to review token corresponds to the item.

Token-based techniques described herein provide numerous technical effects and benefits. For instance, the right to review token that is generated in response to a buyer initiating a transaction with a seller to purchase a product or service offered by the seller provides a secure method of authenticating the buyer to the third-party review service. In this manner, token-based techniques described provide automated fraud detection for third-party review services. Furthermore, providing a public indication that the review is certified lets other users of the third-party review service know that particular review is not fraudulent. Thus, third-party review services implementing the token-based techniques disclosed herein are more secure compared to conventional third-party review services because, unlike conventional third-party review services, third-party review services according to example aspects of the present disclosure provide a public indicator (e.g. by exposing tokens issued to a buyer submitting a review of a seller and/or a item the buyer purchased from the seller) within a published review to let other individuals know that the published review is certified. In this manner, reviews published by third-party review services according to example aspects of the present disclosure can be more credible compared to reviews published by conventional third-party review services that are not secure and, as a result, publish fake reviews. For example, the use of right to review tokens to authenticate buyers submitting reviews of sellers and/or items sold by sellers as described herein provides an auditable manner of automatic fraud prevention, thereby improving the technical field of third-party review publication software.

Additionally, by automatically preventing publication of fraudulent reviews, techniques described herein avoid the utilization of computing resources that would otherwise occur in association with the generation and publication of fraudulent reviews, as well as in association with receiving, processing, and responding to requests to remove such fraudulent reviews. Thus, in addition to enabling automated fraud prevention in a way that was not possible with prior third-party review services (e.g., due to such prior third-party review services not having access to electronic data that could otherwise be used to authenticate reviews, such as electronic transaction records maintained by sellers), embodiments of the present disclosure improve the functioning of computing devices involved through the reduction of computing resource utilization.

As used herein, the term "token" may refer to any suitable credential that may be used to authenticate a buyer to a third-party review service. Furthermore, it should be appreciated that the token may be provided in any suitable format. For instance, in some embodiments, the token may be embedded in a quick response (QR) code. Alternatively, the token may be included in a blockchain.

### Computing Environment for Providing Certified Reviews for Third-Party Review Services

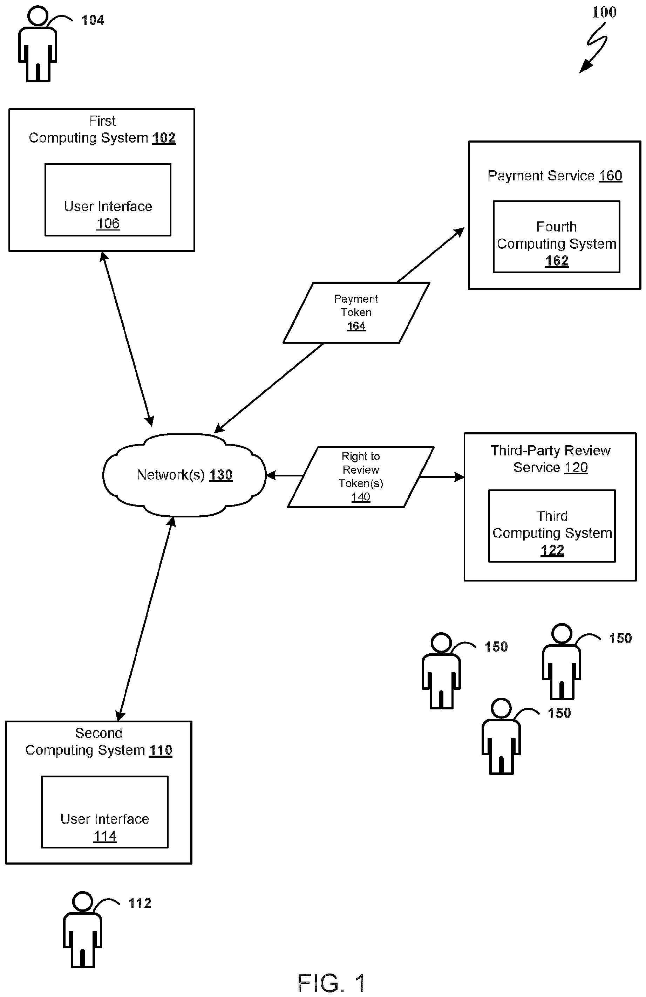

**FIG. 1** illustrates a computing environment 100 for generating tokens for authenticating buyers to third-party review services according to some embodiments of the present disclosure. As shown, the computing environment 100 may include a first computing system 102 associated with a seller 104, a second computing system 110 associated with a buyer 112, a third computing system 120 associated with a third-party review service 122, and a fourth computing system 130 associated with a payment service 132. The first computing system 102 and the second computing system 110 may, as shown, include a user interface 106 and 114 that allow the seller 104 and the buyer 112 to view content (e.g., reviews). It should be appreciated that the first computing system 102, the second computing system 110, the third computing system 120, and the fourth computing system 130 may be communicatively coupled to one another via one or more networks 140. Examples of the network(s) 140 may include, without limitation, a wide area network (WAN), a local area network (LAN), and/or a cellular network.

The buyer 112 may initiate a transaction with the seller 104 to purchase an item (e.g., product or service) being offered for sale by the seller 104. For instance, in some embodiments, the buyer 112 may use the second computing system 110 to communicate with the first computing system 102 associated with the seller 104 to initiate the transaction to purchase the item being offered for sale by the seller 104.

It should be appreciated, however, that the scope of the present disclosure may include embodiments in which the buyer 112 initiates the transaction with the seller 104 without using the second computing system 110. As an example, the seller 104 may be a restaurant and the buyer 112 may be a patron dining at the restaurant. In such embodiments, the buyer 112 may initiate a transaction with the seller 104 by placing an order with a waiter or waitress employed by the seller 104.

One or more right to review tokens 150 may be generated subsequent to the buyer 112 initiating the transaction with the seller 104. For instance, in some embodiments, the seller 104, specifically the first computing system 102 associated therewith, may generate the right to review token 150. In alternative embodiments, the seller 104 may send a request to the third-party review service 122 and the third-party review service 122 may generate the right to review token(s) 150. In such embodiments, the third-party review service 122 may communicate a unique URL address to the first computing system 102. The unique URL address may point to the right to review token(s) 150 generated by the third-party review service 122. The first computing system 102 may then communicate the unique URL address to the second computing system 110 associated with the buyer 112. In this manner, the buyer 112 may access (e.g., via the second computing system 110) the right to review token(s) 150 via the unique URL address. It is noted that a URL is included as an example, and other methods of providing the right to review token(s) 150 to the buyer 112 may also be employed. For example, the right to review token(s) 150 may be transmitted directly to the buyer 112, such as via a text message, email, or other form of communication.

The right to review token(s) 150 may include a signature (e.g., signed by a private key) that is unique to the seller 104. The third-party review service 122 may authenticate the buyer 112 based on the right to review token(s) 150. For instance, the third-party review service 122 may authenticate that the buyer 112 has the right to review the seller 104 by verifying that the signature included in the right to review token(s) 150 belongs to the seller 104.

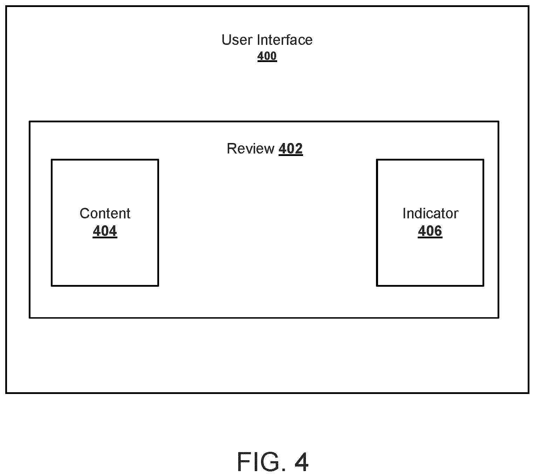

Once the third-party review service 122 authenticates the buyer 112, a review of the seller 104 that the buyer 112 generated may be published by the third-party review service 122 so that the review is publicly available. Additionally, the third-party review service 122 may provide a public indication that the published review is certified to let other individuals 160 using the third-party review service know that the published review of the seller 104 is certified and therefore is not fraudulent. For example, the public indication may include an indicator (described in more detail later on in **FIG. 4**) that lets the other individuals 160 using the third-party review service 122 know that the published review of the seller 104 is certified. Alternatively, or additionally, the third-party review service 122 may provide the public indication that the published review is certified by making the right to review token(s) 150 publicly available. For example, the third-party review service 122 may place the right to review token(s) 150 on a blockchain. In this manner, the other individuals 160 using the third-party review service 122 may access the blockchain to inspect the right to review token(s) 150.

It should be appreciated that, in some embodiments, the third-party review service 122 may make the right to review token(s) 150 publicly available within the published review of the seller 104. In this manner, the other individuals 160 using the third-party review service 122 may access the right to review token(s) 150 without having to navigate to a different screen of a user interface associated with the third-party review service 122.

In some embodiments, additional tokens may be required in order to authenticate the buyer 112 to the third-party review service 122. For instance, in some embodiments, a payment token 170 that is generated by the payment service 132 and is indicative of the transaction between the buyer 112 and the seller 104 may be required in order to authenticate the buyer 112 to the third-party review service 122. The payment token 170 may include financial information associated with the transaction between the buyer 112 and the seller 104. For example, the financial information may include a record of the transaction. The record may indicate the amount of money the buyer 112 paid the seller 104 for the item. In addition, the record may include other pertinent information regarding the transaction, such as a timestamp indicative of when payment was made.

The third-party review service 122 may determine the buyer 112 has the right to review the seller 104 by verifying the right to review token(s) 150 includes the signature of the seller 104 and by also verifying the payment token 170 indicates the buyer 112 paid the seller 104 for the item that is the subject of the transaction between the buyer 112 and the seller 104.

In some embodiments, the right to review token(s) 150 may include a first right to review token that authenticates the buyer 112 to provide a review of the seller 104 and a second right to review token that authenticates the buyer 112 to provide a review of the item the buyer 112 purchased from the seller 104. The first right to review token may include the signature (e.g., signed by a private key) that is unique to the seller 104. The second right to review token may include a signature that is unique to the item. In such embodiments, the third-party review service 122 may determine the buyer 112 has the right to submit a review for both the seller 104 and the item. In some embodiments, only a right to review token for the seller (and not for any particular item sold by the seller) may be required to submit a review of the seller that does not reference a particular item.

### Sequence Diagram for Providing Certified Reviews for Third Party Review Services

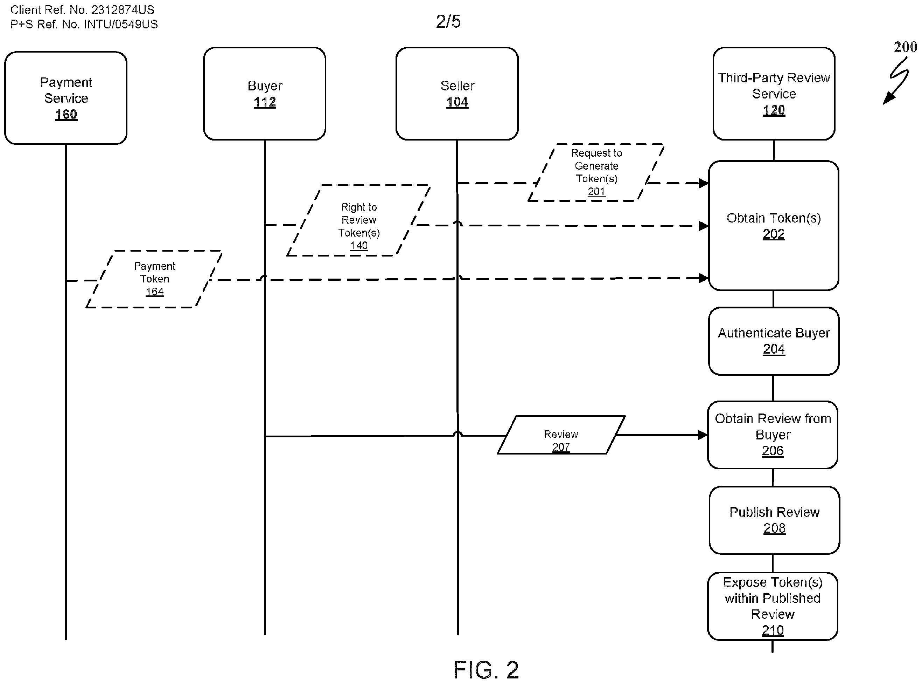

**FIG. 2** illustrates a sequence diagram 200 for authenticating and exposing a right to review token according to some embodiments of the present disclosure. For simplicity, the sequence diagram 200 will be discussed in conjunction with the computing environment 100 of **FIG. 1****.** It is noted that operations described herein as being performed by the buyer or seller (e.g., buyer 112 or seller 104) may be performed by computing devices associated with the buyer or seller, such as first computing system 102 and second computing system 110 of **FIG. 1****.** It is also noted that operations described herein as being performed by the third-party review service 122 may be performed by computing devices associated with a provider of the third-party review service 122, such as the third computing system 120 of **FIG. 1****.**

At (202), the third-party review service 122 may obtain one or more tokens according to some embodiments of the present disclosure. For example, in some embodiments, the third-party review service 122 may receive the right to review token(s) 150 from the buyer 112. In alternative embodiments, the third-party review service 122 may generate the right to review token(s) 150 in response to a request 201 received from the seller 104 in response to the buyer 112 initiating a transaction with the seller 104 to purchase an item offered for sale by the seller 104.

In some embodiments, the right to review token(s) 150 may include a first right to review token authorizing the buyer 112 to submit a review of the seller 104. Alternatively, or additionally, the right to review token(s) 150 may include a second right to review token authorizing the buyer 112 to submit a review of the item (e.g., product or service) the buyer 112 purchased from the seller 104. In this manner, separate right to review tokens 150 (e.g., a first right to review token and a second right to review token) may be needed to authorize the buyer 112 to submit a review of the seller 104 and the item the buyer 112 purchased from the seller 104. Furthermore, in addition to the right to review token(s) 150, the third-party review service 122 may, in some embodiments, obtain the payment token 170 from the payment service 132.

At (204), the third-party review service 122 may authenticate the buyer 112 by verifying the token(s) obtained at (202). For instance, in some embodiments, the right to review token(s) 150 obtained at (202) may include the first right to review token authorizing a review of the seller 104. In addition, the right to review token(s) 150 obtained at (202) may include the second right to review token authorizing a review of the product or service the buyer 112 purchased from the seller 104. The third-party review service 122 may be configured to verify the right to review token(s) 150 based on a signature (e.g., signed by a private key) that is included in the right to review token(s) 150. For example, the first right to review token authorizing a review of the seller 104 may include a signature (e.g., signed by a private key) that is unique to the seller 104. Similarly, the second right to review token authorizing a review of the product or service offered by the seller 104 may include a signature (e.g., signed by a private key) that is unique to the product or service.

In some embodiments, the third-party review service 122 may verify the signature included in the right to review token(s) 150 by comparing the signature(s) included therein to a list of a plurality of unique signatures. For example, the third-party review service 122 may verify the signature included in the first right to review token by verifying the signature corresponds to a first signature included in the list of unique signatures that is associated with the seller 104.

After authenticating the buyer 112 at (204), the third-party review service 122 may, at (206), receive a review from the buyer 112. Alternatively, in some embodiments, the review 207 may be submitted by the buyer 112 along with the right to review token(s) 150, and the third-party review service 122 may authenticate the buyer upon receipt of the review 207 and the right to review token(s) 150. In some embodiments, the review may include responses from the buyer 112 to a plurality of different questions included in a survey or questionnaire. For example, in some embodiments, the questions included in the survey may be questions that require a simple "yes" or "no" response. Alternatively, or additionally, the review received from the buyer 112 may include comments generated by the buyer 112.

At (208), the third-party review service 122 may publish the review received from the buyer 112. For instance, in some embodiments, the review may be published on a web page that may be accessed by individuals that use the third-party review service 122 to read reviews for different sellers and/or products or services sold by each of those different sellers.

At (210), the third-party review service 122 may provide a public indication that the published review is certified. In some embodiments, the third-party review service 122 may provide the public indication by making the token(s) obtained at (202) publicly available so that other individuals (e.g., individuals 160 in **FIG. 1**) using the third-party review service 122 may inspect the token(s) to confirm for themselves that the review is certified. For example, the third-party review service 122 may make the token(s) publicly available by placing the token(s) on a blockchain and, in some embodiments, a link to the right to token(s) on the blockchain may be displayed within the published review. Alternatively, or additionally, the third-party review service 122 may provide the public indication that the published review is certified by denoting the published review with an indicator to let other individuals (e.g., individuals 160 in **FIG. 1**) using the third-party review service 122 know that the published review is certified. As an example, the indicator may include a graphical image (e.g., a checkmark), text, or a combination of the two that lets the other individuals know the published review is certified.

### Method for Providing Certified Reviews on Third Party Review Services

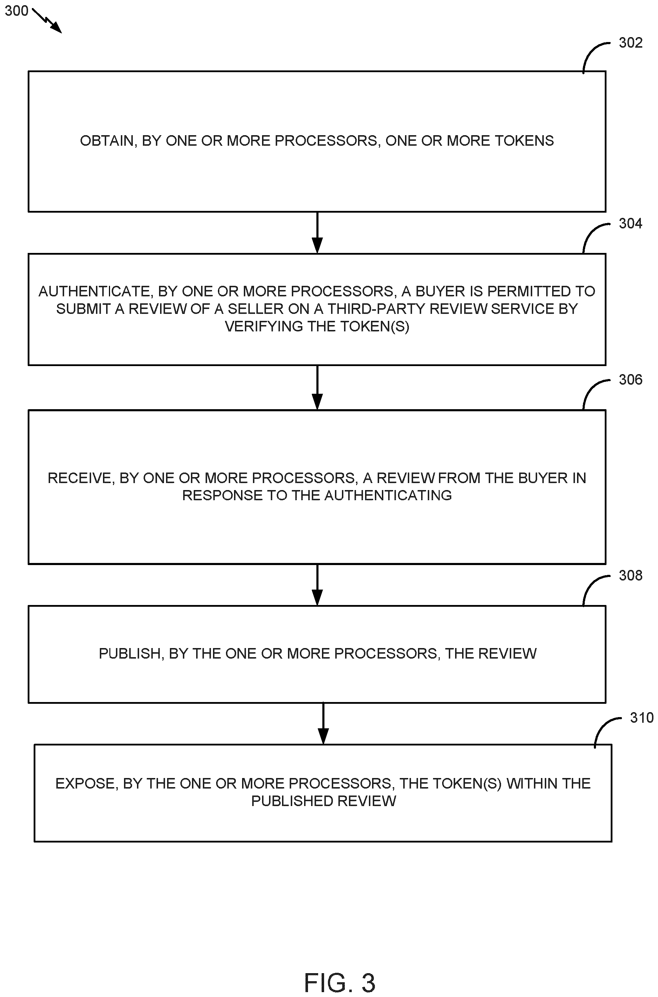

**FIG. 3** is a flow diagram of an example method 300 for providing certified reviews on third-party review services according to some embodiments of the present disclosure. The method 300 may be performed by instructions executing on a processor associated with a third-party review service (such as the third-party review service 122 of **FIG. 1**).

At (302), the method 300 may include obtaining one or more tokens according to some embodiments of the present disclosure. In some embodiments, obtaining the token(s) may include receiving right to review token(s) from a buyer initiating a transaction with a seller to purchase a product or service being offered by the seller. Alternatively, or additionally, obtaining the token(s) may include generating the right to review token(s) in response to a request from the seller that is in response to the buyer initiating the transaction with the seller.

At (304), the method 300 may include authenticating the buyer by verifying the right token(s) obtained at (302). For instance, in some embodiments, the token(s) obtained at (202) may include a first right to review token authorizing a review of the seller 104 and a second right to review token authorizing a review of the product or service the buyer purchased from the seller. The third-party review service may be configured to verify the token(s) based on a signature (e.g., signed by a private key) that is included in the token(s). For example, the token(s) may include a first right to review token authorizing a review of the seller. The first right to review token may include a signature (e.g., signed by a private key) that is unique to the seller and may be used by the third-party review service to verify the first right to review token. In some embodiments, the token(s) may include a second right to review token authorizing a review of the item the buyer purchased from the seller. The second right to review token may include a signature (e.g., signed by a private key) that is unique to the item and may be used by the third party review service to verify the second right to review token.

At (306), the method 300 may include receiving a review from the buyer. In some embodiments, the review may include responses from the buyer to a plurality of different questions included in a survey or questionnaire. For example, in some embodiments, the questions included in the survey may be questions that require a simple "yes" or "no" response. Alternatively, or additionally, the review may include comments generated by the buyer.

At (308), the method 300 may include publishing the review received at (306) so that the review is visible to other individuals using the third-party review service. For instance, in some embodiments, publishing the review may include displaying the review on a web page that the other individuals can access.

At (310), the method 300 may include providing a public indication that the published review is certified. In some embodiments, providing the public indication may include making the token(s) obtained at (202) publicly available so that other individuals (e.g., individuals 160 in **FIG. 1**) using the third-party service may inspect the token(s) to confirm for themselves that the review is certified. For example, the token(s) may be made publicly available by placing the token(s) on a blockchain. In addition, a link to the right to token(s) on the blockchain may be displayed within the published review. Alternatively, or additionally, providing the public indication may include denoting the published review with an indicator to let other individuals (e.g., individuals 160 in **FIG. 1**) using the third-party service know that the published review is certified. As an example, the indicator may include a graphical image (e.g., a checkmark), text, or a combination of the two that lets the other individuals know the published review is certified.

### Example Certified Review Published By Third Party Review Service

**FIG. 4** depicts a user interface 400 associated with a third-party review service according to some embodiments of the present disclosure. As shown, the user interface 400 may include a published review 402. The published review 402 may include content 404 generated by a buyer regarding a transaction with a seller to purchase an item. In some embodiments, the content 404 may include comments about the seller. Alternatively, or additionally, the content 404 may include comments about the item the buyer purchased from the seller.

In some embodiments, the user interface may include an indicator 406 that denotes the published review 402 is a certified review and therefore can be trusted. It should be appreciated that the indicator 406 may include text, a graphical image, or both. For instance, in some embodiments, the indicator 406 may include a graphical image of a check mark. In another example, the indicator may include text such as "Certified" adjacent to the graphical image of the check mark or instead of such a graphical image. In this manner, the indicator 406 lets other individuals using the third-party review service know that the review 402 is certified and therefore can be trusted. In other embodiments, the indicator 406 may include one or more right to review token(s) themselves, or links to such right to review token(s), such as links to a public blockchain or other publicly accessible location at which such token(s) are stored.

### Example Computing Systems

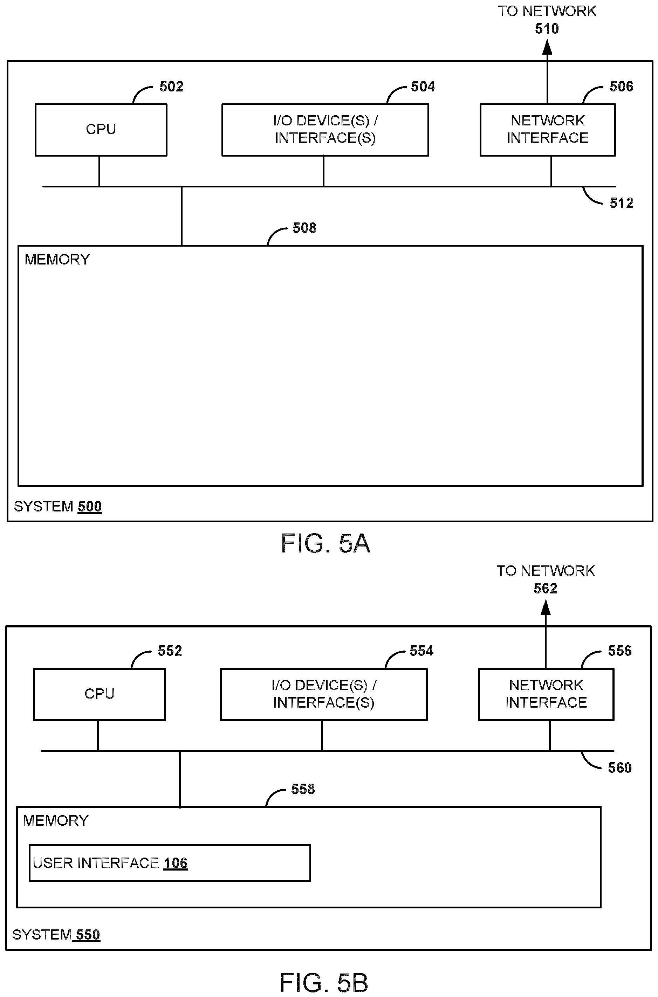

**FIG. 5A** illustrates an example computing system 500 with which embodiments of the computing environment 100 of **FIG. 1** may be implemented. For example, the computing system 500 may be representative of the computing system (e.g., third computing system 120 and fourth computing system 130) of the third-party review service 122 and the payment service 132 depicted in **FIG. 1****.**

The computing system 500 includes a central processing unit (CPU) 502, one or more I/O device interfaces 504 that may allow for the connection of various I/O devices 504 (e.g., keyboards, displays, mouse devices, pen input, etc.) to the computing system 500, a network interface 506, a memory 508, and an interconnect 512. It is contemplated that one or more components of the computing system 500 may be located remotely and accessed via a network 510 (e.g., which may be the network(s) 140 of **FIG. 1**). It is further contemplated that one or more components of the computing system 500 may include physical components or virtualized components.

The CPU 502 may retrieve and execute programming instructions stored in the memory 508. Similarly, the CPU 502 may retrieve and store application data residing in the memory 508. The interconnect 512 transmits programming instructions and application data, among the CPU 502, the I/O device interface 504, the network interface 506, the memory 508. The CPU 502 is included to be representative of a single CPU, multiple CPUs, a single CPU having multiple processing cores, and other arrangements.

Additionally, the memory 508 is included to be representative of a random access memory or the like. In some embodiments, the memory 508 may include a disk drive, solid state drive, or a collection of storage devices distributed across multiple storage systems. Although shown as a single unit, the memory 508 may be a combination of fixed and/or removable storage devices, such as fixed disc drives, removable memory cards or optical storage, network attached storage (NAS), or a storage area-network (SAN).

**FIG. 5B** illustrates an example computing system 550 with which embodiments of the computing environment 100 may be implemented. For example, the computing system 550 may be representative of the first computing system 102 and second computing system 110 associated with the seller 104 and buyer 112, respectively, of **FIG. 1****.**

The computing system 550 includes a central processing unit (CPU) 552, one or more I/O device interfaces 554 that may allow for the connection of various I/O devices (e.g., keyboards, displays, mouse devices, pen input, etc.) to the computing system 550, a network interface 556, a memory 558, and an interconnect 560. It is contemplated that one or more components of the computing system 550 may be located remotely and accessed via a network 562 (e.g., which may be the network(s) 140 of **FIG. 1**). It is further contemplated that one or more components of the computing system 550 may include physical components or virtualized components.

The CPU 552 may retrieve and execute programming instructions stored in the memory 558. Similarly, the CPU 552 may retrieve and store application data residing in the memory 558. The interconnect 560 transmits programming instructions and application data, among the CPU 552, the I/O device interface 554, the network interface 556, the memory 558. The CPU 552 is included to be representative of a single CPU, multiple CPUs, a single CPU having multiple processing cores, and other arrangements.

Additionally, the memory 558 is included to be representative of a random access memory or the like. In some embodiments, the memory 558 may include a disk drive, solid state drive, or a collection of storage devices distributed across multiple storage systems. Although shown as a single unit, the memory 558 may be a combination of fixed and/or removable storage devices, such as fixed disc drives, removable memory cards or optical storage, network attached storage (NAS), or a storage area-network (SAN).

As shown, the memory 558 may, in some embodiments, include the user interface 106. 114 discussed above with reference to **FIG. 1****.**

Thus, from one perspective, there has now been described a method for providing certified reviews on a third-party review service which includes obtaining one or more tokens associated with a transaction between a buyer and a seller to purchase an item from the seller. The method includes authenticating the buyer to provide a review of at least one of the seller or the item based on the one or more tokens. The method includes receiving a review generated by the buyer and, based on the authenticating, publishing the review so that the review is publicly accessible via the third-party-review service. The method includes providing a public indication that the published review is certified.

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that may execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor may read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Further examples of feature combinations taught by the present disclosure are set out in the following numbered clauses:
1. A method for providing certified reviews on a third-party review service, the method comprising:
   obtaining, via one or more processors, one or more tokens associated with a transaction between a buyer and a seller to purchase an item from the seller;
   authenticating, by the one or more processors, the buyer to provide a review of at least one of the seller or the item based on the one or more tokens;
   receiving, by the one or more processors, a review generated by the buyer;
   based on the authenticating, publishing, by the one or more processors, the review so that the review is publicly accessible via the third-party review service; and
   providing, by the one or more processors, a public indication that the published review is certified.
2. The method of Clause 1, wherein providing the public indication comprises making the one or more tokens publicly available.
3. The method of Clause 2, wherein making the one or more tokens publicly available comprises storing, by the one or more processors, the one or more tokens on a blockchain.
4. The method of any preceding Clause, wherein providing the public indication comprises denoting the published review with an indicator to publicly convey that the published review is certified without making the one or more tokens publicly available.
5. The method of Clause 4, wherein the indicator comprises a graphical image.
6. The method of any preceding Clause, wherein the one or more tokens comprise a first right to review token authorizing the buyer to review the seller, the first right to review token comprising a signature that is unique to the seller.
7. The method of Clause 6, wherein the authenticating comprises:
   determining, by the one or more processors, the signature included in the first right to review token corresponds to a first signature included in a plurality of unique signatures; and
   determining, by the one or more processors, the buyer is authenticated to submit a review of the seller based on the determining that the signature included in the first right to review token corresponds to the first signature included in the plurality of unique signatures.
8. The method of Clause 6 or Clause 7, wherein the one or more tokens includes a second right to review token authorizing the buyer to review the item, the second right to review token including a signature that is unique to the item.
9. The method of Clause 8, wherein the one or more tokens further comprise a payment token that is indicative of the transaction between the buyer and the seller.
10. The method of Clause 9, wherein the payment token indicates a price the buyer paid the seller for the item.
11. A system for providing certified reviews on a third-party review service, the system comprising:
   one or more processors; and
   one or more memory configured to store computer executable instructions that, when executed by the one or more processors, cause the one or more processors to:
      obtain one or more tokens associated with a transaction between a buyer and a seller to purchase an item from the seller;
      authenticate the buyer to provide a review of at least one of the seller or the item based on the one or more tokens;
      receive a review generated by the buyer;
         based on the authenticating, publish the review so that the review is publicly accessible via the third-party review service; and
      provide a public indication that the published review is certified.
12. The system of Clause 11, wherein to provide the public indication, the one or more processors are configured to make the one or more tokens publicly available.
13. The system of Clause 12, wherein to make the one or more tokens publicly available, the one or more processors are configured to store the one or more tokens on a blockchain.
14. The system of any of Clauses 11 to 13, wherein to provide the public indication, the one or more processors are configured to denote the published review with an indicator to publicly convey that the published review is certified without making the one or more tokens publicly available.
15. The system of Clause 14, wherein the indicator comprises a graphical image.
16. The system of any of Clauses 11 to 15, wherein the one or more tokens comprise a first right to review token authorizing the buyer to review the seller, the first right to review token comprising a signature that is unique to the seller.
17. The system of Clause 16, wherein the authenticating comprises:
   determining, by the one or more processors, the signature included in the first right to review token corresponds to a first signature included in a plurality of unique signatures; and
   determining, by the one or more processors, the buyer is authenticated to submit a review of the seller based on the determining that the signature included in the first right to review token corresponds to the first signature included in the plurality of unique signatures.
18. The system of Clause 16 or Clause 17, wherein the one or more tokens includes a second right to review token authorizing the buyer to review the item, the second right to review token including a signature that is unique to the item.
19. The system of Clause 18, wherein the one or more tokens further comprise a payment token that is indicative of the transaction between the buyer and the seller.
20. A computer readable medium encoding instructions to be executed in a computer system, wherein the instructions when executed in the computer system perform a method for providing certified reviews on a third-party review service, the method comprising:
   obtaining one or more tokens associated with a transaction between a buyer and a seller to purchase an item from the seller;
   authenticating the buyer to provide a review of at least one of the seller or the item based on the one or more tokens;
   receiving a review generated by the buyer;
   based on the authenticating, publishing the review so that the review is publicly accessible via the third-party review service; and
   providing a public indication that the published review is certified.

## Claims

1. A method for providing certified reviews on a third-party review service, the method comprising:
obtaining, via one or more processors, one or more tokens associated with a transaction between a buyer and a seller to purchase an item from the seller;
authenticating, by the one or more processors, the buyer to provide a review of at least one of the seller or the item based on the one or more tokens;
receiving, by the one or more processors, a review generated by the buyer;
based on the authenticating, publishing, by the one or more processors, the review so that the review is publicly accessible via the third-party review service; and
providing, by the one or more processors, a public indication that the published review is certified.

2. The method of Claim 1, wherein providing the public indication comprises making the one or more tokens publicly available.

3. The method of Claim 2, wherein making the one or more tokens publicly available comprises storing, by the one or more processors, the one or more tokens on a blockchain.

4. The method of any preceding Claim, wherein providing the public indication comprises denoting the published review with an indicator to publicly convey that the published review is certified without making the one or more tokens publicly available.

5. The method of Claim 4, wherein the indicator comprises a graphical image.

6. The method of any preceding Claim, wherein the one or more tokens comprise a first right to review token authorizing the buyer to review the seller, the first right to review token comprising a signature that is unique to the seller.

7. The method of Claim 6, wherein the authenticating comprises:
determining, by the one or more processors, the signature included in the first right to review token corresponds to a first signature included in a plurality of unique signatures; and
determining, by the one or more processors, the buyer is authenticated to submit a review of the seller based on the determining that the signature included in the first right to review token corresponds to the first signature included in the plurality of unique signatures.

8. The method of Claim 6 or Claim 7, wherein the one or more tokens includes a second right to review token authorizing the buyer to review the item, the second right to review token including a signature that is unique to the item.

9. The method of Claim 8, wherein the one or more tokens further comprise a payment token that is indicative of the transaction between the buyer and the seller.

10. The method of Claim 9, wherein the payment token indicates a price the buyer paid the seller for the item.

11. A system for providing certified reviews on a third-party review service, the system comprising:
one or more processors; and
one or more memory configured to store computer executable instructions that, when executed by the one or more processors, cause the one or more processors to:
obtain one or more tokens associated with a transaction between a buyer and a seller to purchase an item from the seller;
authenticate the buyer to provide a review of at least one of the seller or the item based on the one or more tokens;
receive a review generated by the buyer;
based on the authenticating, publish the review so that the review is publicly accessible via the third-party review service; and
provide a public indication that the published review is certified.

12. The system of Claim 11, wherein to provide the public indication, the one or more processors are configured to make the one or more tokens publicly available.

13. The system of Claim 12, wherein to make the one or more tokens publicly available, the one or more processors are configured to store the one or more tokens on a blockchain.

14. The system of any of Claims 11 to 13, wherein to provide the public indication, the one or more processors are configured to denote the published review with an indicator to publicly convey that the published review is certified without making the one or more tokens publicly available.

15. A computer readable medium encoding instructions to be executed in a computer system, wherein the instructions when executed in the computer system perform a method for providing certified reviews on a third-party review service, the method comprising:
obtaining one or more tokens associated with a transaction between a buyer and a seller to purchase an item from the seller;
authenticating the buyer to provide a review of at least one of the seller or the item based on the one or more tokens;
receiving a review generated by the buyer;
based on the authenticating, publishing the review so that the review is publicly accessible via the third-party review service; and
providing a public indication that the published review is certified.
